(19) **Europäisches Patentamt / European Patent Office / Office européen des brevets**

(11) **EP 1 806 925 A2**

(12) # EUROPEAN PATENT APPLICATION

(43) Date of publication:
**11.07.2007 Bulletin 2007/28**

(51) Int Cl.:
**H04N 7/01** (2006.01)

(21) Application number: **07100208.3**

(22) Date of filing: **08.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **10.01.2006 KR 20060002749**

(71) Applicant: **SAMSUNG ELECTRONICS CO., LTD.**
**Suwon-si,**
**Gyeonggi-do (KR)**

(72) Inventors:
• **Kwon, Oh-jae**
  **Anyang-si, Gyeonggi-do (KR)**
• **Min, Jong-sul**
  **Taean-eup, Hwaseong-si, Gyeonggi-do (KR)**
• **Seong, Hwa-seok**
  **Suwon-si, Gyeonggi-do (KR)**

(74) Representative: **Benson, Christopher**
  **Appleyard Lees**
  **15 Clare Road**
  **Halifax HX1 2HY (GB)**

(54) **Frame rate converter**

(57)     A frame rate converter is provided, and includes a motion vector calculator (30) which calculates a motion vector; a motion error calculator (40) which calculates a motion error level of the motion vector; an interpolation frame output part (70) which generates a repetition interpolation frame, which corresponds to the current frame or the previous frame, and a motion interpolation frame based on the motion vector; and a controller (50) which calculates a frame selection value larger than a preset reference selection value by more than a first level when the motion error level is larger than a reference error level, and calculates a frame selection value smaller than the previous frame selection value by a second level, which is smaller than the first level, when the motion error level is smaller than the reference error level, and controls the interpolation frame output part (70) to output the repetition interpolation frame or the motion interpolation frame based on the calculated frame selection value.

F I G . 1

EP 1 806 925 A2

## Description

Apparatus consistent with the present invention relate to a frame rate converter.

Generally, a frame rate converter (FRC) converts a frequency of an input video signal according to an output standard. For example, a new interpolation frame is inserted between original frames to convert a video signal from 50Hz to 100Hz.

There are methods to generate such an interpolation frame including a method of repeating original frames and a method of calculating a motion vector by using motion estimation and motion compensation.

Related art frame rate converters calculate a reliability of the motion vector and determine whether to use a repetition interpolation frame or a motion interpolation frame according to the motion vector based on the extent of simply-calculated reliability of the motion vector.

However, when the motion estimation is misconducted, the motion interpolation frame is displayed on a display part with a lower picture quality than the repetition frame is displayed thereon. As the motion interpolation frame and the repetition interpolation frame are repeatedly used, the picture quality is lowered.

Accordingly, it is an aspect of the present invention to provide a frame rate converter which properly displays a repetition interpolation frame and a motion interpolation frame to improve picture quality.

Additional aspects of the present invention will be set forth in part in the description which follows and, in part, will be apparent from the description, or may be learned by practice of the present invention.

According to the present invention there is provided an apparatus and method as set forth in the appended claims. Preferred features of the invention will be apparent from the dependent claims, and the description which follows.

According to an aspect of the present invention, there is provided a frame rate converter which selectively outputs a frame interpolated through a motion vector, or a frame generated by repeating one of two neighboring frames, to generate an interpolation frame which is inserted between the two neighboring frames.

According to a first aspect of the present invention, there is provided a frame rate converter comprising a motion vector calculator which calculates a motion vector by comparing a current frame and a previous frame, a motion error calculator which calculates a motion error level of the motion vector, an interpolation frame output part which generates a repetition interpolation frame, which corresponds to the current frame or the previous frame, and a motion interpolation frame based on the motion vector, and a controller which calculates a frame selection value larger than a preset reference selection value by more than a first level when the motion error level is larger than a reference error level, and calculates a frame selection value smaller than the previous frame selection value by a second level, which is smaller than the first level, when the motion error level is smaller than the reference error level, and controls the interpolation frame output part to output the repetition interpolation frame or the motion interpolation frame based on the calculated frame selection value.

According to an exemplary embodiment of the present invention, the controller controls the interpolation frame to output the repetition interpolation frame when the calculated frame selection value is larger than the reference selection value and to output the motion interpolation frame when the calculated frame selection value is not larger than the reference selection value.

According to an exemplary embodiment of the present invention, the controller increases the frame selection value from the previous frame selection value by the second level when the motion error level is repeatedly larger than the reference error level.

According to an exemplary embodiment of the present invention, each of the first and second levels comprise an integer.

According to an exemplary embodiment of the present invention, the motion vector calculator divides the current frame into a plurality of reference blocks of a set size and calculates the motion vector by comparing the reference blocks with a searching area set in the previous frame, and wherein the motion error calculator calculates the motion error level by reference block.

According to an exemplary embodiment of the present invention, the motion error calculator calculates the motion error level based on at least one of a motion estimation error value and vector differences between motion vectors of neighboring blocks of the reference block.

According to an exemplary embodiment of the present invention, the motion estimation error value comprises at least one of a sum of absolute difference (SAD) and a mean absolute difference (MAD).

According to an exemplary embodiment of the present invention, the motion error level according to the motion estimation error value is calculated according to at least one of a first motion error level and a second motion error level with a following formula:

$$n_1 = \sum_{i=0}^{Nb} INT(d_1(i))$$

$$s_1 = \sum_{i=0}^{Nb} d_1(i)$$

where

$$INT(n) = \begin{cases} 1, n \geq 1 \\ 0, otherwise \end{cases}$$

$$d_1(i) = RND\left(\frac{\varphi(V_i)}{\theta_1}\right)$$

RND(a) = N if a ≥ N and a < N+1.

wherein $n_1$ denotes a first motion error level, $s_1$ denotes a second motion error level, N denotes an integer, Vi denotes the motion vector, $\Phi$ denotes the motion estimation error value, $\theta_1$ denotes a first critical value, and Nb denotes to a number of the reference blocks.)

According to an exemplary embodiment of the present invention, the controller determines that the motion error level is larger than the reference error level when at least one of following conditions is satisfied: a first condition in which the first motion error level is larger than a first reference error level and a second condition in which the second motion error level is larger than a second reference error level.

According to an exemplary embodiment of the present invention, the second reference error level is proportional to the first motion error level.

According to an exemplary embodiment of the present invention, the vector differences are calculated according to a following formula:

$$D(V') = \sum_{V_i \in S} Wi \times |V'-Vi|$$

wherein D(V') denotes the vector differences, Wi denotes a weight value of respective neighboring blocks, V' denotes the motion vector corresponding to the reference blocks, and Vi denotes the motion vector corresponding to the neighboring blocks.

According to an exemplary embodiment of the present invention, the motion error level according to the vector differences is calculated according to at least one of a third motion error level and a fourth motion error level with a following formula:

$$n_2 = \sum_{i=0}^{Nb} INT(d_2(i))$$

$$s_2 = \sum_{i=0}^{Nb} d_2(i)$$

where

$$INT(n) = \begin{cases} 1, n \geq 1 \\ 0, otherwise \end{cases}$$

$$d_2(i) = RND\left(\frac{D(V_i)}{\theta_2}\right)$$

RND(a) = N if a ≥ N and a < N+1

wherein $n_2$ denotes the third motion error level, $s_2$ denotes the fourth motion error level, N denotes an integer, Vi denotes the motion vector, D(Vi) denotes the motion estimation error value, $\theta_2$ denotes a second critical value, and Nb denotes a number of the reference blocks.)

According to an exemplary embodiment of the present invention, the controller determines that the motion error level is larger than the reference error level when at least one of following conditions is satisfied: a third condition in which the third motion error level is larger than a third reference error level and a fourth condition in which the fourth motion error level is larger than a fourth reference error level.

According to an exemplary embodiment of the present invention, the fourth reference error level is proportional to the third motion error level.

According to an exemplary embodiment of the present invention, the controller determines that the motion error level is larger than the reference error level when at least one of following conditions is satisfied: a first condition in which the first motion error level is larger than the first reference error level, a second condition in which the second motion error level is larger than the second reference error level, a third condition in which the third motion error level is larger than the third reference error level, a fourth condition in which the fourth motion error level is larger than the fourth reference error level, and a fifth condition in which the first motion error level is larger than a fifth reference error level and the third motion error level is larger than a sixth reference error level.

According to an exemplary embodiment of the present invention, the second reference error level is proportional to the first motion error level, and the fourth reference error level is proportional to the third motion error level.

According to an exemplary embodiment of the present invention, the first reference error level is smaller than the second reference error level, and the third reference error level is smaller than the fourth reference error level.

According to an exemplary embodiment of the present invention, the frame selection value comprises at least one of an upper limit value and a lower limit value.

According to another aspect of the present invention, there is provided a frame rate converter comprising a motion vector calculator which calculates a motion vector by comparing a current frame and a previous frame, a motion error calculator which calculates a motion error level of the motion vector, an interpolation frame output part which generates a repetition interpolation frame, which corresponds to the current frame or the previous frame, and a motion interpolation frame based on the motion vector, and a controller which calculates a frame selection value smaller than a reference selection value by less than a first level when the motion error level is larger than the reference error level, and calculates a frame selection value larger than a previous frame selection value by a second level, which is smaller than the first level, when the motion error level is smaller than the reference error level, and controls the interpolation frame output part to output the repetition interpolation frame or the motion interpolation frame based on the calculated frame selection value.

According to an exemplary embodiment of the present invention, the controller controls the interpolation frame output part to output the repetition interpolation frame when the calculated frame selection value is smaller than the reference selection value and to output the motion interpolation frame when the calculated frame selection value is not smaller than the reference selection value.

According to an exemplary embodiment of the present invention, the controller calculates the frame selection value smaller than the previous frame selection value by the second level when the motion error level is repeatedly larger than the reference error level.

According to an exemplary embodiment of the present invention, the first and second levels comprise an integer.

According to an exemplary embodiment of the present invention, the motion vector calculator divides the current frame into a plurality of reference blocks in a set size and calculates the motion vector by comparing the reference blocks with a searching area set in the previous frame, and wherein the motion error calculator calculates the motion error level by each reference block, and calculates the motion error level based on at least one of a motion estimation error value and vector differences between motion vectors corresponding to respective neighboring blocks of the reference blocks.

According to an exemplary embodiment of the present invention, the frame selection value comprises at least one of the largest value and the smallest value.

For a better understanding of the invention, and to show how embodiments of the same may be carried into effect, reference will now be made, by way of example, to the accompanying diagrammatic drawings in which:

Figure 1 is a control block diagram of a frame rate converter according to an exemplary embodiment of the present invention;

Figure 2A illustrates a picture displayed on a display part when the frame rate converter according to an exemplary embodiment of the present invention outputs a repetition interpolation frame to the display part;

Figure 2B illustrates a picture displayed on the display part when the frame rate converter according to an exemplary embodiment of the present invention outputs a motion interpolation frame to the display part;

Figure 3 illustrates a reference block and neighboring blocks of a current frame according to an exemplary embodiment of the present invention; and

Figure 4 is a control flowchart of the frame rate converter according to an exemplary embodiment of the present invention.

Reference will now be made in detail to the exemplary embodiments of the present invention, examples of which are illustrated in the accompanying drawings, wherein like reference numerals refer to like elements throughout.

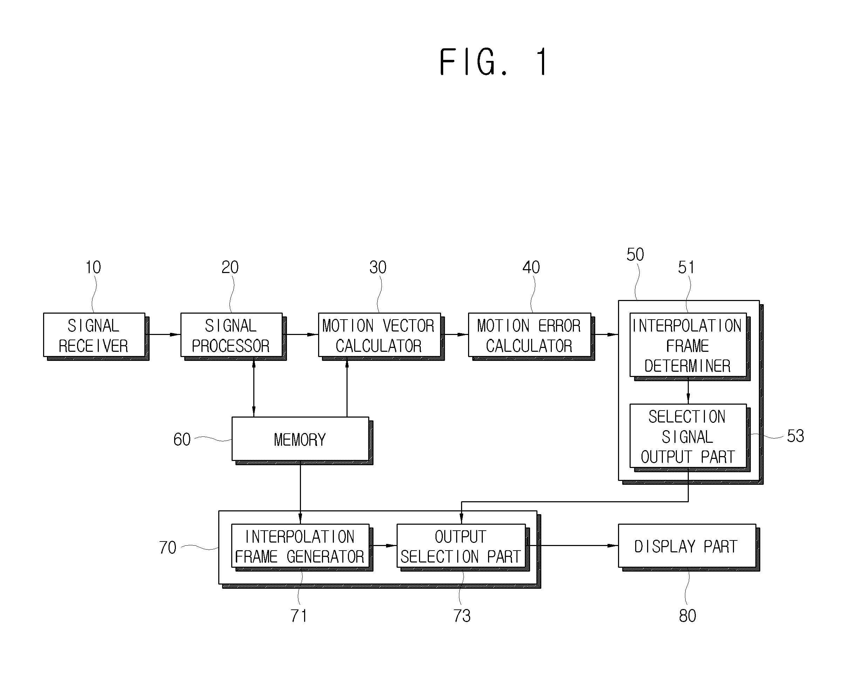

As shown in Figure 1, a frame rate converter according to an exemplary embodiment of the present invention comprises a motion vector calculator 30, a motion error calculator 40, an interpolation frame output part 70, and a controller 50. The frame rate converter may further comprise a signal receiver 10, a signal processor 20, a memory 60 and a display part 80.

The signal receiver 10 receives a video signal from an external video source. That is, the signal processor 10 may comprise a terminal corresponding to a format of various video signals to receive various video signals. The signal receiver 10 according to an exemplary embodiment of the present invention may comprise at least one of a composite input terminal to receive a composite signal; an S-video input terminal to receive an S-video signal; a component input terminal to receive a component signal; and a personal computer (PC) input terminal and a television (TV) input terminal to receive a PC signal and a TV signal, respectively. The video signal received through the signal receiver 10 is displayed on the display part 80 by frame.

The signal processor 20 processes the video signal input through the signal receiver 10 to be output to the display part 80. The signal processor 20 processes an image corresponding to the video signal to be displayed on the display part 80, by a control of a processing controller (not shown).

The signal processor 20 is provided at an input terminal of the motion vector calculator 30 in Figure 1, but is not limited thereto. Alternatively, the signal processor 20 may be provided at an output terminal of the interpolation frame output part 70.

The motion vector calculator 30 calculates a motion vector by using a current frame and a previous frame of the video signal. The motion vector calculator 30 estimates the motion vector for motion compensation through a block matching algorithm (BMA). The motion vector calculator 30 compares two frames (the current frame and the previous frame) per block to estimate a single motion vector per block, according to the BMA.

According to an exemplary embodiment of the present invention, the motion vector calculator 30 divides the image of the current frame $F_N$ into blocks in a regular size, sets each of the plurality of blocks as the reference block and estimates the motion vector of respective reference blocks. The motion vector calculator 30 detects the most similar block of the reference blocks in a searching area of a previous frame $F_{N-1}$ and estimates the distance between the two blocks, as the motion vector. The motion vector calculator 30 may use motion estimation error values such as a sum of absolute difference (SAD) or a mean absolute difference (MAD) to estimate similarities between the reference blocks and the similar blocks within the searching area.

The motion estimation error value may be calculated by a following formula:

$$\Phi(V) = \sum_{X \in B} \left| F_{N-1}(X + V) - F_N(X) \right|$$

Here, $\Phi(V)$ denotes to a motion estimation error value, B denotes a reference block, X denotes pixel coordinates included in the reference blocks, and V denotes a relative distance from the reference blocks within the searching area.

The motion vector calculator 30 may determine a vector which minimizes the motion estimation error value, as the motion vector.

The motion vector calculator 30 outputs the calculated motion vector to the memory 60 to be stored therein. The motion vector calculator 30 may read the motion vector of the previous frame stored in the memory 60 to calculate the motion vector of the current frame based on the motion vector of the previous frame.

The method of calculating the motion vector through the motion vector calculator 30 is above described according to the exemplary embodiment of the present invention, but is not limited thereto. Alternatively, the motion vector may be calculated based on both the previous frame and the current frame.

The motion error calculator 40 calculates a motion error level of the motion vector calculated by the motion vector calculator 30. The motion error calculator 40 calculates the motion error level by reference block. The motion error calculator 40 may calculate the motion error level based on at least one of the motion estimation error value and vector differences.

When the motion error level is calculated based on the motion estimation error value, the motion error calculator 40 according to the exemplary embodiment of the present invention may calculate the motion error level based on the number of blocks having the motion estimation error value supplied by the motion vector calculator 30, which is larger than the value. The value may be predetermined. The motion error calculator 40 according to another exemplary embodiment of the present invention may calculate the motion error level according to whether the sum of motion estimation error values are larger than a value. The motion error calculator 40 may divide the motion estimation error value by a value and then sum up an integer of the quotient in the respective blocks, to calculate the motion error level. The value may be predetermined.

The motion error calculator 40 according to the exemplary embodiment of the present invention may define the number of the blocks having the motion estimation error value larger than the value, as $n_1$, and calculate the motion error level based on $n_1$. Here, $n_1$ denotes a first motion error level, N denotes an integer, Vi denotes the motion vector, $\Phi$ denotes the motion estimation error value, $\theta_1$ denotes a first critical value, and Nb denotes a number of the reference blocks in a single frame:

$$n_1 = \sum_{i=0}^{Nb} INT(d_1(i))$$

where

$$INT(n) = \begin{cases} 1, n \geq 1 \\ 0, otherwise \end{cases}$$

$$d_1(i) = RND\left(\frac{\varphi(V_i)}{\theta_1}\right)$$

RND(a) = N if a $\geq$ N and a < N+1.

The motion error calculator 40 divides the motion estimation error value calculated by the motion vector calculator 30 by the first critical value, and then defines the integer of the quotient as $d_1$, to calculate the first motion error level. The number of the blocks having at least one $d_1$ from the reference blocks may be calculated as the first motion error level.

Meanwhile, the motion error calculator 40 may calculate a second motion error level using a following formula:

$$s_1 = \sum_{i=0}^{Nb} d_1(i)$$

That is, the motion error calculator 40 may sum up $d_1$ of the respective reference blocks to obtain the second motion error level $s_1$. Thus, the motion error calculator 40 may calculate the motion error level generated when some, even if not many, reference blocks have large motion error values according to the second motion error level, as well as errors generated when the first motion error level is large to increase the number of the reference blocks having the motion error by more than the certain value.

The motion error calculator 40 according to another exemplary embodiment of the present invention may calculate the motion error level according to vector differences between the motion vector corresponding to the reference blocks and the motion vector corresponding to the neighboring blocks adjacent to the reference blocks.

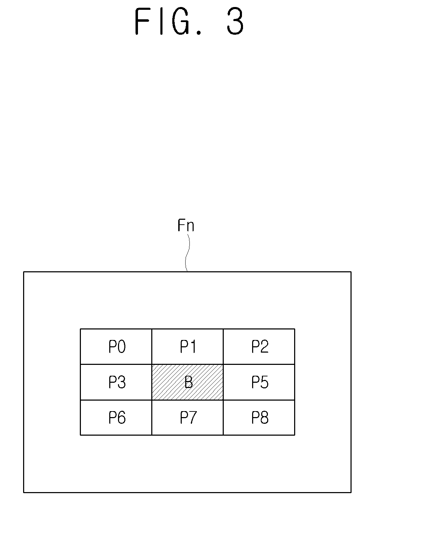

As shown in Figure 3, a single frame may be divided into a plurality of blocks. Figure 3 illustrates part of the divided blocks. The respective blocks refer to a reference block B, which is a basis of calculating the motion vector. The neighboring blocks P0, P1, P2, P3, P5, P6, P7 and P8 surround the reference block B, but is not limited thereto. Alternatively, the neighboring blocks P0, P1, P2, P3, P5, P6, P7 and P8 may be variously provided.

A weight value, which may be predetermined, may be assigned to the neighboring blocks P0, P1, P2, P3, P5, P6, P7 and P8, respectively, to calculate the vector differences. When the reference block B and the neighboring blocks P0, P1, P2, P3, P5, P6, P7 and P8 are set as shown in Figure 3, a weight value W0 is assigned to the block P0, a weight value W1 is assigned to P1, a weight value W2 to P2, a weight value W3 to P3, a weight value W5 to P5, a weight value W6 to P6, a weight value W7 to P7, a weight value W8 to P8, and a weight value W4 to the reference block B. It is advantageous if W4 is the highest weight value among them, and P2 and P6 have relatively smaller weight values, based on the distance between the reference block and the neighboring blocks.

The vector difference is obtained by adding the values which are generated by multiplying the difference between the calculated motion vector and the previous motion vector of the neighboring blocks P0, P1, P2, P3, P5, P6, P7 and P8 of the previous frame by the value proportional to the distance between the reference block B and the neighboring blocks P0, P1, P2, P3, P5, P6, P7 and P8. Thus, the vector differences may represent the correlation between the neighboring blocks P0, P1, P2, P3, P5, P6, P7 and P8, and the reference block B. Generally, the actual motion vector between the neighboring blocks is similar to each other in each frame. Thus, the smaller the vector difference is, the more precise the motion vector of the reference block B is.

Meanwhile, the motion error calculator 40 may calculate the motion error level with a following formula, based on the vector differences:

$$D(V') = \sum_{V_i \in S} Wi \times \left| V' - Vi \right|$$

Here, D(V') denotes the vector differences, Wi denotes the weight value of the neighboring blocks and the reference block, V' denotes a motion vector corresponding to the reference blocks, Vi denotes the motion vector corresponding to the neighboring blocks. S denotes the searching area.

The motion error calculator 40 according to the exemplary embodiment of the present invention may calculate the motion error level based on the number of blocks having a larger vector difference value than a certain value.

The motion error calculator 40 according to another exemplary embodiment of the present invention may calculate the motion error level according to whether the sum of vector difference values is larger than certain value. The motion error calculator 40 may divide the vector difference values by the certain value and sum the integer of the quotient by blocks, to calculate the motion error level.

The motion error calculator 40 according to the exemplary embodiment of the present invention may define the number of blocks having vector difference values larger than the certain value, as $n_2$, to calculate the motion error level based on $n_2$. Here, $n_2$ denotes a third motion error level, N denotes an integer, Vi denotes a motion vector, D(Vi) denotes a vector difference value, $\theta_2$ denotes a second critical value and Nb denotes the number of the reference blocks in a single frame:

$$n_2 = \sum_{i=0}^{Nb} INT(d_2(i))$$

$$s_2 = \sum_{i=0}^{Nb} d_2(i)$$

where

$$INT(n) = \begin{cases} 1, n \geq 1 \\ 0, otherwise \end{cases}$$

$$d_2(i) = RND\left(\frac{D(V_i)}{\theta_2}\right)$$

RND(a) = N if a ≥ N and a < N+1

The motion error calculator 40 divides the vector difference value by the second critical value and defines the integer of the quotient as $d_2$, to calculate the third motion error level. The motion error calculator 40 may calculate the third motion error level with the number of the blocks having at least one $d_2$ by reference block.

Meanwhile, the motion error calculator 40 may calculate a fourth motion error level with a following formula:

$$s_2 = \sum_{i=0}^{Nb} d_2(i)$$

That is, the motion error calculator 40 may sum up $d_2$ obtained by each reference block to calculate the fourth motion error level $s_2$. Thus, the motion error calculator 40 may calculate the motion error level generated when some, even if not many, reference blocks have large motion error values according to the fourth motion error level, as well as errors generated when the third motion error level is large to increase the number of the reference blocks with the motion error by more than a certain value.

The interpolation frame output part 70 generates the interpolation frame to be output to the display part 80. The interpolation frame output part 70 may comprise an interpolation frame generator 71 and an output selection part 73.

The interpolation frame generator 71 generates the interpolation frame based on the current and previous frames. The interpolation frame generator 71 generates the motion interpolation frame based on the motion vector calculated by the motion vector calculator 30 and stored in the memory 60. Also, the interpolation frame generator 71 generates a repetition interpolation frame by repeating one of the previous and current frames, regardless of the motion vector, to display the repetition interpolation frame on the display part 80. The repetition interpolation frame denotes a frame to repeatedly display one of the previous frame and the current frame on the display part 80. Accordingly, the interpolation frame generator 71 may output one of the previous and current frames as the repetition interpolation frame without an additional process.

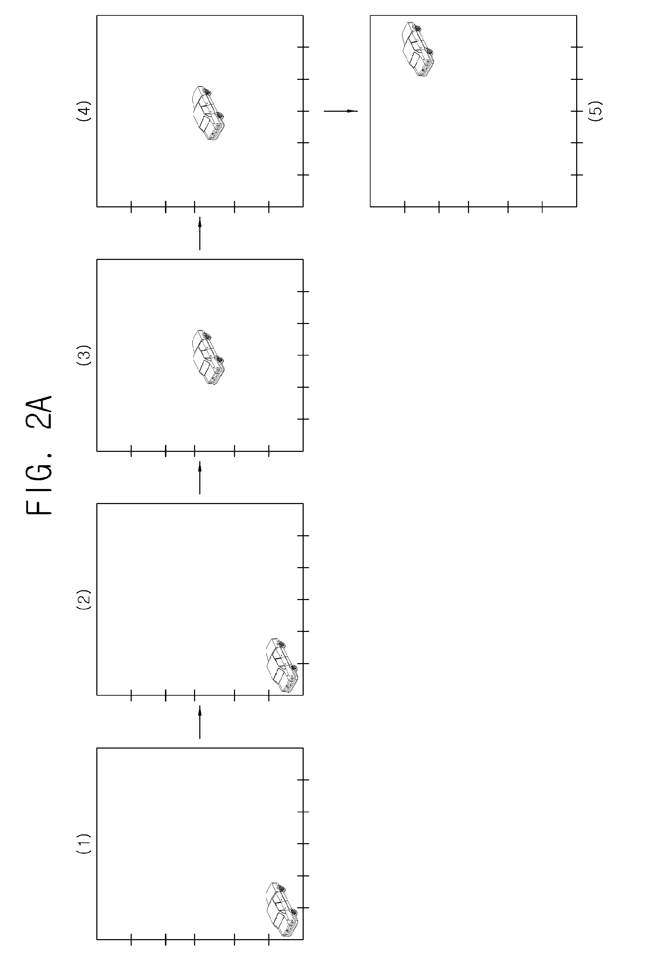

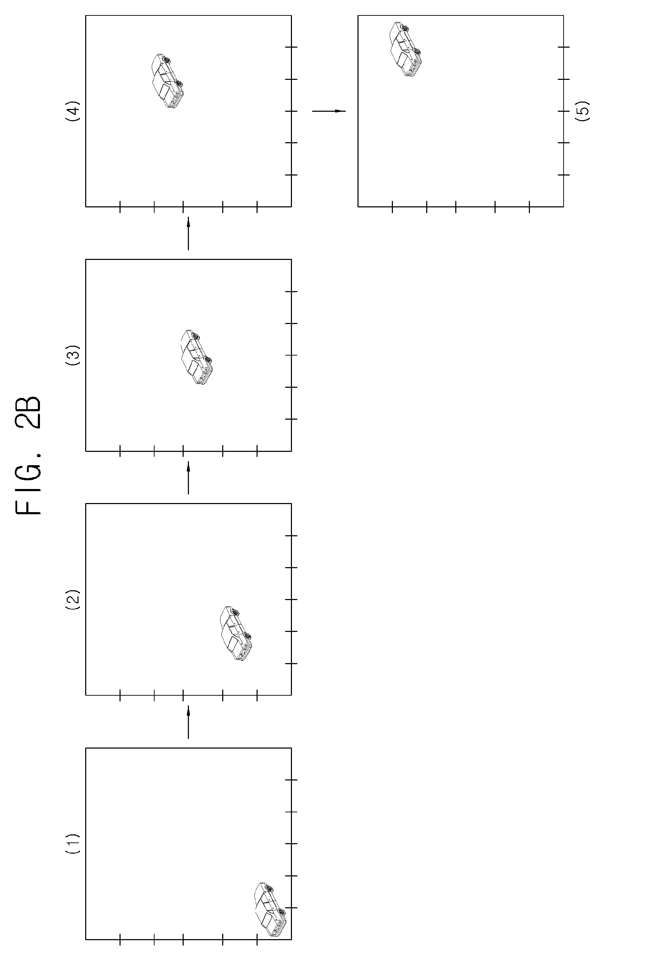

Figures 2A and 2B illustrate frames that are displayed on the display part 80 together with the interpolation frames (2) and (4) when frames (1), (3) and (5) are sequentially supplied from the outside.

Referring to Figure 2A, the interpolation frame generator 71 generates the frame (2) same as the frame (1), and the frame (4) identical to the frame (3), to generate the repetition interpolation frame. Alternatively, the frame (2) may be identical to the frame (3), and the frame (4) may be identical to the frame (5).

Referring to Figure 2B, the interpolation frame generator 71 generates a motion interpolation frame (2) according to the motion vector based on frames (1) and (3), and generates a motion interpolation frame (4) according to the motion vector based on frames (3) and (5).

The output selection part 73 selects the motion interpolation frame or the repetition interpolation frame generated by the interpolation frame generator 71, to output it to the display part 80 according to a control of the controller 50 (to be described later). The output selection part 73 may comprise a configuration having a selection operation such as a multiplexer.

The controller 50 of the frame rate converter according to an exemplary embodiment of the present invention may comprise an interpolation frame determiner 51 and a selection signal output part 53.

The interpolation frame determiner 51 determines the interpolation frame to be displayed on the display part 80, with one of the repetition interpolation frame and the motion interpolation frame generated by the interpolation frame generator 71, based on the motion error level calculated by the motion error calculator 40.

When the motion error level is determined to be larger than a threshold value, the interpolation frame determiner 51 may control the interpolation frame output part 70 to select the repetition interpolation frame since the reliability of the motion vector is unreliable. When the motion error level is determined to be not larger than the threshold value, the interpolation frame determiner 51 may control the interpolation frame output part 70 to select the motion interpolation frame since the reliability of the motion vector is acceptable.

When the interpolation frame determiner 51 simply selects the interpolation frame according to whether the motion error level is larger than the threshold value, a problem arises that the type of the interpolation frame changes too often.

Thus, the interpolation frame determiner 51 according to an exemplary embodiment of the present invention selects the motion interpolation frame only when the motion error level is smaller than the threshold value continuously, to display the interpolation frame on the display part 80.

The interpolation frame determiner 51 calculates a frame selection value larger than the reference selection value by more than a first level, when the motion error level is larger than a reference error level. When the motion error level is smaller than the reference error level, the interpolation frame determiner 51 decreases the frame selection value by a second level from the previous frame selection value. The size of the second level is smaller than that of the first level.

The frame selection value is a base to select the type of the interpolation frame. That is, the interpolation frame determiner 51 may select the type of the interpolation frame according to the frame selection value. Specifically, the interpolation frame determiner 51 determines the repetition interpolation frame as the interpolation frame when the calculated frame selection value is larger than the reference selection value. When the calculated frame selection value is not larger than the reference selection value, the interpolation frame determiner 51 determines the motion interpolation frame as the interpolation frame. Then, the selection signal output part 53 outputs a selection signal according to the interpolation frame determiner 51, to the output selection part 73.

The output selection part 73 outputs one of the repetition interpolation frame and the motion interpolation frame according to the selection signal from the selection signal output part 53.

When the motion error level is repeatedly larger than the reference error level, the interpolation frame determiner 51 may increase the frame selection value from the previous frame selection value by the second level. It is advantageous if the first and second levels are integers, but the first and second levels are not limited thereto, and may alternatively be non-integers.

The interpolation frame determiner 51 of the controller 50 may determine that the motion error level is larger than the reference error level when at least one of the following conditions is satisfied: a first condition in which the first motion error level is larger than a first reference error level ($n_1$ > first reference error level), a second condition in which the second motion error level is larger than a second reference error level ($s_1$ > second reference error level), a third condition in which the third motion error level is larger than a third reference error

level ($n_2$ > third reference error level), a fourth condition in which the fourth motion error level is larger than a fourth reference error level ($s_2$ > fourth reference error level), and a fifth condition in which the first motion error level is larger than a fifth reference error level and the third motion error level is larger than a sixth reference error level ($n_1$ > fifth reference error level, and $n_2$ > sixth reference error level).

The second reference error level may be proportional to the first motion error level, and the fourth reference error level may be proportional to the third motion error level.

The first reference error level may be smaller than the second reference error level, and the third reference error level may be smaller than the fourth reference error level. That is, the interpolation frame determiner 51 may determine that the motion error level is larger than the reference error level when the first and third reference error levels are larger than the reference value even if the respective errors are not large, as well as when the error of one of the first and third motion error levels is large.

Hereinafter, an operation of the interpolation frame determiner 51 will be described. Here, the reference selection value is 0, and the first level is 4 and the second level is 1 as an exemplary embodiment of the present invention.

When the motion error level is determined to be larger than the reference error level, the interpolation frame determiner 51 calculates the frame selection value which is 4 or more, according to the foregoing conditions.

When the frame selection value is smaller than 4 and the motion error level is determined to be larger than the reference error level, the interpolation frame determiner 51 determines that the frame selection value is 4. Since the reference selection value is 0 and the current frame selection value is 4, the interpolation frame determiner 51 determines the repetition interpolation frame as the interpolation frame. The selection signal output part 53 controls the interpolation frame output part 70 to output the repetition interpolation frame.

When the interpolation frame determiner 51 determines that the motion error level is larger than the reference error level in the next frame, the interpolation frame determiner 51 may increase the frame selection value by 1, i.e., the second level. Thus, the frame selection value becomes 5. As the frame selection value is still larger than 0, the interpolation frame output part 70 outputs the repetition interpolation frame.

When the interpolation frame determiner 51 determines that the motion error level is smaller than the reference error level in the next frame, the interpolation frame determiner 51 may decrease the frame selection value by 1, i.e., the second level. Then, the frame selection value becomes 4 and the repetition interpolation frame is displayed on the display part 80.

With the foregoing method, the interpolation frame determiner 51 determines the motion interpolation frame when the frame selection value is not larger than 0, and the selection signal output part 53 controls the interpolation frame output part 70 to output the motion interpolation frame.

Then, the interpolation frame determiner 51 has the frame selection value of 4 when the motion error level is determined to be larger than the reference error level, even if the frame selection value is very small. Accordingly, the motion interpolation frame is displayed on the display part 80 only when the motion error level is continuously smaller than the reference error level. The frame rate converter according to an exemplary embodiment of the present invention reduces the deterioration of picture quality due to the mis-estimated motion vector as the motion interpolation frame according to the mis-estimated motion vector is not displayed on the display part 80 when there is an error in the motion estimation.

Also, the frame selection value may have at least one of the upper limit value and the lower limit value. When the frame selection value does not comprise the upper limit value and the motion error level is determined to be larger than the reference error level by the growing number of times, the frame selection value becomes very large. Here, the frame selection value may be larger than the reference selection value even if the stable motion vector is repeatedly calculated with the stabilized motion estimation. Thus, it is advantageous to set the upper limit value of the frame selection value to properly apply the motion interpolation frame according to the motion vector. The lower limit value of the frame selection value may be set for convenience of a designer of the present invention.

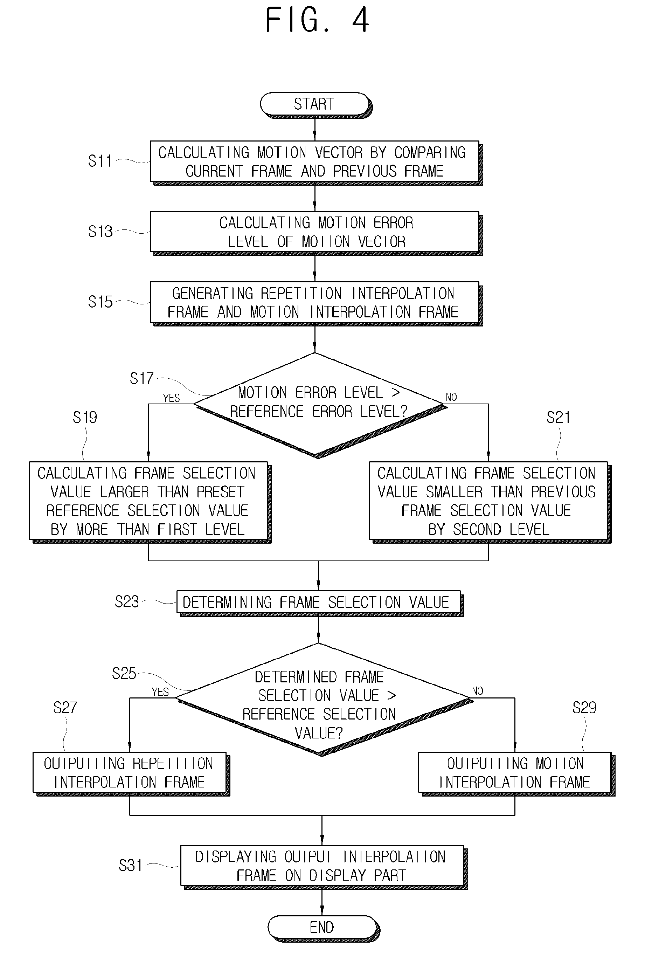

As shown in Figure 4, the frame rate converter according to an exemplary embodiment of the present invention may receive a video signal through the signal receiver 10. Here, the video signal may be set by frame. The motion vector calculator 30 of the frame rate converter according to an exemplary embodiment of the present invention may calculate the motion vector based on the current and previous frames (S11). Here, the motion vector calculator 30 may calculate the motion vector based on the motion vector of the previous frame, and the previous frame information stored in the memory 60. The motion vector calculator 30 may store the calculated motion vector in the memory 60. The motion vector calculator 30 may calculate the motion estimation error value to calculate the motion vector, and may output the calculated motion estimation error value to the motion error calculator 40.

The motion error calculator 40 may calculate the motion error level based on at least one of the motion estimation error value and the vector differences (S13). As the method of calculating the motion error level by the motion error calculator 40 is described above, that will be omitted here.

The interpolation frame generator 71 generates the motion interpolation frame and the repetition interpolation frame based on the motion vector, the current and previous frames stored in the memory 60 (S15). The interpolation frame generator 71 generates the interpolation frame at the step of S15 in Figure 4, but is not limited thereto. Alternatively, the interpolation frame may be generated at an operation after the operation of S11 and before the operations of S27 and S29. Here, the information on the current frame may be supplied to the interpolation frame generator 71, instead of being stored in the memory 60.

The interpolation frame determiner 51 compares the motion error level calculated by the motion error calculator 40 and the reference error level (S17). As the method of comparing the motion error level and the reference error level by the interpolation frame determiner 51 is described above, it will be omitted here.

When the motion error level is determined to be larger than the reference error level, the interpolation frame determiner 51 increases the frame selection value from the reference selection value by more than the first level (S19). When the motion error level is not determined to be larger than the reference error level, the interpolation frame determiner 51 decreases the frame selection value from the previous frame selection value by the second level (S21). When the motion error level is repeatedly larger than the reference error level, the interpolation frame determiner 51 may increase the frame selection value from the previous frame selection value by the second level.

With the foregoing method, when the frame selection value is determined (S23), the interpolation frame determiner 51 compares the determined frame selection value with the reference selection value (S25). When the determined frame selection value is larger than the reference selection value based on a comparison result, the interpolation frame determiner 51 determines the repetition interpolation frame as the interpolation frame (S27).

When the determined frame selection value is not larger than the reference selection value, the interpolation frame determiner 51 may determine the motion interpolation frame as the interpolation frame (S29). Then, the selection signal output part 53 outputs the selection signal to the interpolation frame output part 70 according to the determination of the interpolation frame determiner 51.

When the determined frame selection value is larger than the reference selection value, the interpolation frame output part 70 outputs the repetition interpolation frame to the display part 80. When the determined frame selection value is not larger than the reference selection value, the interpolation frame output part 70 outputs the motion interpolation frame to the display part 80. Then, the display part 80 displays the interpolation frame supplied by the interpolation frame output part 70, between the current frame and the previous frame (S31).

In the foregoing exemplary embodiment, the controller 50 controls to raise the frame selection value when the motion error level is larger than the reference error level, but is not limited thereto. Alternatively, a designer of an exemplary embodiment of the present invention may design to decrease the frame selection value when the motion error level is larger than the reference error level. The controller 50 may control to decrease the frame selection value from the reference selection value by more than the first level when the motion error level is larger than the reference error level. When the motion error level is repeatedly larger than the reference error level, the controller 50 may control to decrease the frame selection value from the previous frame selection value by the second level.

When the motion error level is smaller than the reference error level, the controller 50 may control to increase the frame selection value from the previous frame selection value by the second level. In such a case, the controller 50 according to an exemplary embodiment of the present invention may control the interpolation frame output part 70 to output the repetition interpolation frame when the frame selection value is smaller than the reference selection value, and to output the motion interpolation frame when the frame selection value is larger than the reference selection value.

As described above, the frame rate converter according to the present invention may calculate the motion error level generated when some, even if not many, reference blocks have large motion error values according to the motion error level, as well as the errors generated when the motion error level becomes large to increase the number of the reference blocks having errors by more than the threshold value.

The motion interpolation frame is displayed on the display part 80 only when the motion error level is continuously smaller than the reference error level, thereby lowering the possibility of displaying the interpolation frame with the wrong motion estimation, on the display part 80. Accordingly, motion blur or artifact generated by the wrong motion estimation can be reduced. The repetition of the interpolation frame between the motion interpolation frame and the repetition interpolation frame may be reduced. Also, the repetition interpolation frame and the motion interpolation frame may be properly used according to the extent of the motion error.

As described above, the present invention provides a frame rate converter which properly displays a repetition interpolation frame and a motion interpolation frame to improve picture quality.

Also, in exemplary embodiments of the present invention, there is less possibility of displaying an interpolation frame with wrong motion estimation, on a display part. Further, the frame rate converter according to an exemplary embodiment of the present invention may determine an interpolation frame in consideration with a motion error level generated when some, even if not many, reference blocks have large motion error levels, as well as an error generated when a motion error level is large to increase the number of the reference blocks with the motion error by more than a certain level.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A frame rate converter, comprising:

   a motion vector calculator (30) which calculates a motion vector by comparing a current frame and a previous frame;
   a motion error calculator (40) which calculates a motion error level of the motion vector;
   an interpolation frame output part (70) which generates a repetition interpolation frame, which corresponds to one of the current frame and the previous frame, and a motion interpolation frame based on the motion vector; and
   a controller (50) which calculates a frame selection value larger than a preset reference selection value by more than a first level when the motion error level is larger than a reference error level, and calculates a frame selection value smaller than the previous frame selection value by a second level, which is smaller than the first level, when the motion error level is smaller than the reference error level, and controls the interpolation frame output part (70) to output the repetition interpolation frame or the motion interpolation frame based on the calculated frame selection value.

2. The frame rate converter according to claim 1, wherein the controller (50) controls the interpolation frame output part (70) to output the repetition interpolation frame when the calculated frame selection value is larger than the reference selection value and to output the motion interpolation frame when the calculated frame selection value is not larger than the reference selection value.

3. The frame rate converter according to claim 1 or 2, wherein the controller (50) increases the frame selection value from the previous frame selection value by the second level when the motion error level is repeatedly larger than the reference error level.

4. The frame rate converter according to claim 1, 2 or 3, wherein each of the first and second levels comprise an integer.

5. The frame rate converter according to any preceding claim, wherein the motion vector calculator (30) divides the current frame into a plurality of reference blocks of a set size and calculates the motion vector by comparing the reference blocks with a searching area set in the previous frame, and wherein the motion error calculator (40) calculates the motion error level by reference block.

6. The frame rate converter according to claim 5, wherein the motion error calculator (40) calculates the motion error level based on at least one of a motion estimation error value and vector differences between motion vectors of neighboring blocks of the reference block.

7. The frame rate converter according to any preceding claim, wherein the motion estimation error value comprises at least one of a sum of absolute difference (SAD) and a mean absolute difference (MAD).

8. The frame rate converter according to any preceding claim, wherein the motion error level according to the motion estimation error value is calculated according to at least one of a first motion error level and a second motion error level with a following formula:

$$n_1 = \sum_{i=0}^{Nb} INT(d_1(i))$$

$$s_1 = \sum_{i=0}^{Nb} d_1(i)$$

where

$$INT(n) = \begin{cases} 1, n \geq 1 \\ 0, otherwise \end{cases}$$

$$d_1(i) = RND\left(\frac{\varphi(V_i)}{\theta_1}\right)$$

RND(a) = N if a ≥ N and a < N+1
wherein $n_1$ denotes a first motion error level, $s_1$ denotes a second motion error level, N denotes an integer, Vi denotes the motion vector, Φ denotes the motion estimation error value, $\theta_1$ denotes a first critical value, and Nb denotes a number of the reference blocks.

9. The frame rate converter according to any preceding claim, wherein the controller (50) determines that the motion error level is larger than the reference error level when at least one of following conditions is satisfied: a first condition in which the first motion error level is larger than a first reference error level and a second condition in which the second motion error level is larger than a second reference error level.

10. The frame rate converter according to claim 9, wherein the second reference error level is proportional to the first motion error level.

11. The frame rate converter according to any of claims 6 to 10, wherein the vector differences are calculated according to a following formula:

$$D(V') = \sum_{V_i \in S} Wi \times |V' - Vi|$$

wherein D(V') denotes the vector differences, Wi denotes a weight value of respective neighboring blocks, V' denotes the motion vector corresponding to the reference blocks, and Vi denotes the motion vector corresponding to the neighboring blocks.)

**12.** The frame rate converter according to any of claims 6 to 11, wherein the motion error level according to the vector differences is calculated according to at least one of a third motion error level and a fourth motion error level with a following formula:

$$n_2 = \sum_{i=0}^{Nb} INT(d_2(i))$$

$$s_2 = \sum_{i=0}^{Nb} d_2(i)$$

where

$$INT(n) = \begin{cases} 1, n \geq 1 \\ 0, otherwise \end{cases}$$

$$d_2(i) = RND\left(\frac{D(V_i)}{\theta_2}\right)$$

RND(a) = N if a $\geq$ N and a < N+1
wherein $n_2$ denotes the third motion error level, $s_2$ denotes the fourth motion error level, N denotes an integer, Vi denotes the motion vector, D(Vi) denotes the motion estimation error value, $\theta_2$ denotes a second critical value, and Nb denotes a number of the reference blocks.

**13.** The frame rate converter according to claim 12, wherein the controller (50) determines that the motion error level is larger than the reference error level when at least one of following conditions is satisfied: a third condition in which the third motion error level is larger than a third reference error level and a fourth condition in which the fourth motion error level is larger than a fourth reference error level.

**14.** The frame rate converter according to claim 12 or 13, wherein the fourth reference error level is proportional to the third motion error level.

**15.** The frame rate converter according to any of claims 12 to 14, wherein the controller (50) determines that the motion error level is larger than the reference error level when at least one of following conditions is satisfied: a first condition in which the first motion error level is larger than the first reference error level, a second condition in which the second motion error level is larger than the second reference error level, a third condition in which the third motion error level is larger than the third reference error level, a fourth condition in which the fourth motion error level is larger than the fourth reference error level, and a fifth condition in which the first motion error level is larger than a fifth reference error level and the third motion error level is larger than a sixth reference error level.

**16.** The frame rate converter according to claim 15, wherein the second reference error level is proportional to the first motion error level, and the fourth reference error level is proportional to the third motion error level.

**17.** The frame rate converter according to claim 15 or 16, wherein the first reference error level is smaller than the second reference error level, and the third reference error level is smaller than the fourth reference error level.

**18.** The frame rate converter according to any preceding claim, wherein the frame selection value comprises at least one of an upper limit value and a lower limit value.

**19.** A frame rate converter, comprising:

a motion vector calculator (30) which calculates a motion vector by comparing a current frame and a previous frame;
a motion error calculator (40) which calculates a motion error level of the motion vector;
an interpolation frame output part (70) which generates a repetition interpolation frame, which corresponds to one of the current frame and the previous frame, and a motion interpolation frame based on the motion vector; and
a controller (50) which calculates a frame selection value smaller than a reference selection value by less than a first level when the motion error level is larger than a reference error level, and calculates a frame selection value larger than a previous frame selection value by a second level, which is smaller than the first level, when the motion error level is smaller than the reference error level, and controls the interpolation frame output part (70) to output the repetition interpolation frame or the motion interpolation frame based on the calculated frame selection value.

**20.** The frame rate converter according to claim 19, wherein the controller (50) controls the interpolation frame output part (70) to output the repetition interpolation frame when the calculated frame selection value is smaller than the reference selection value

and to output the motion interpolation frame when the calculated frame selection value is not smaller than the reference selection value.

21. The frame rate converter according to claim 19 or 20, wherein the controller (50) calculates the frame selection value smaller than the previous frame selection value by the second level when the motion error level is repeatedly larger than the reference error level.

22. The frame rate converter according to claim 19, 20 or 21, wherein each of the first and second levels comprise an integer.

23. The frame rate converter according to any of claims 19 to 22, wherein the motion vector calculator (30) divides the current frame into a plurality of reference blocks of a set size and calculates the motion vector by comparing the reference blocks with a searching area set in the previous frame, and wherein the motion error calculator (40) calculates the motion error level by each reference block, and calculates the motion error level based on at least one of a motion estimation error value and vector differences between motion vectors corresponding to respective neighboring blocks of the reference blocks.

24. The frame rate converter according to any of claims 19 to 23, wherein the frame selection value comprises at least one of the largest value and the smallest value.

# FIG. 1

SIGNAL RECEIVER — 10

SIGNAL PROCESSOR — 20

MOTION VECTOR CALCULATOR — 30

MOTION ERROR CALCULATOR — 40

INTERPOLATION FRAME DETERMINER — 50, 51

SELECTION SIGNAL OUTPUT PART — 53

MEMORY — 60

INTERPOLATION FRAME GENERATOR — 70, 71

OUTPUT SELECTION PART — 73

DISPLAY PART — 80

EP 1 806 925 A2

EP 1 806 925 A2

FIG. 2A

(1)

(2)

(3)

(4)

(5)

15

FIG. 2B

# FIG. 3

# FIG. 4

START

S11 — CALCULATING MOTION VECTOR BY COMPARING CURRENT FRAME AND PREVIOUS FRAME

S13 — CALCULATING MOTION ERROR LEVEL OF MOTION VECTOR

S15 — GENERATING REPETITION INTERPOLATION FRAME AND MOTION INTERPOLATION FRAME

S17 — MOTION ERROR LEVEL > REFERENCE ERROR LEVEL?

YES

NO

S19 — CALCULATING FRAME SELECTION VALUE LARGER THAN PRESET REFERENCE SELECTION VALUE BY MORE THAN FIRST LEVEL

S21 — CALCULATING FRAME SELECTION VALUE SMALLER THAN PREVIOUS FRAME SELECTION VALUE BY SECOND LEVEL

S23 — DETERMINING FRAME SELECTION VALUE

S25 — DETERMINED FRAME SELECTION VALUE > REFERENCE SELECTION VALUE?

YES

NO

S27 — OUTPUTTING REPETITION INTERPOLATION FRAME

S29 — OUTPUTTING MOTION INTERPOLATION FRAME

S31 — DISPLAYING OUTPUT INTERPOLATION FRAME ON DISPLAY PART

END